# DEMANDE DE BREVET EUROPEEN

(11) **EP 2 154 116 A1**
(43) Date de publication de la demande: **17.02.2010**
(21) Numéro de dépôt: 08104899.3
(22) Date de dépôt: 28.07.2008
(51) Int. Cl.: C03B 13/08

(54) **Installation de fabrication de verre texturé, lèvre de coulée pour une telle installation, procédé de fabrication de verre texturé et plaque de verre ainsi produite**

(71) Demandeur: VESUVIUS CRUCIBLE COMPANY, Wilmington, DE 19803 (US)
(72) Inventeur: Rancoule, Gilbert, 59700 Marcq-en-Baroeul (FR)
(74) Mandataire: Debled, Thierry

(57) **Abrégé**

L'invention a pour objet une installation (10) de fabrication de verre texturé, comprenant :
- une zone d'alimentation (12) pour verre fondu (14),
- au moins deux rouleaux (16, 18) de laminage du verre, dont l'un (18) au moins comprend une surface texturée,
- au moins une lèvre (20) de coulée du verre fondu (14) depuis la zone d'alimentation (12) vers les rouleaux (16, 18),
- des moyens (34, 40) de chauffage direct de la lèvre (20) de coulée.

## Description

La présente invention concerne une installation de fabrication de verre texturé, également appelé parfois verre imprimé.

On appelle verre texturé un verre comprenant des motifs géométriques en relief imprimés sur la surface du verre. Le verre texturé est utilisé pour différentes applications extérieures ou intérieures telles que par exemple pour la réalisation de fenêtres translucides ou de parois de douche. Récemment, on a suggéré l'utilisation de panneaux de verre texturé pour la production de panneaux solaires. Un certain nombre de problèmes techniques (dimension insuffisante des panneaux et pollution du verre) a jusqu'à présent empêché le développement de ce type d'application.

Le document US 2 883 799 décrit une installation de fabrication de verre texturé obtenu par coulée continue de verre en fusion, initialement stocké dans un réservoir, vers deux rouleaux de laminage dont l'un au moins comprend une surface texturée comprenant un négatif des motifs en relief que l'on souhaite imprimer sur le verre. Eventuellement, le verre en fusion peut s'écouler du réservoir dans un canal avant d'atteindre les rouleaux de laminage.

Il est important de contrôler avec précision la température du verre lors de son laminage car la qualité de l'impression des motifs en relief dépend de la viscosité du verre. En outre, les variations de température peuvent également influencer négativement les propriétés mécaniques et chimiques du verre, telles que l'indice de réfraction ou la couleur du verre.

Dans les installations connues, la température du verre stocké dans le réservoir ou s'écoulant dans le canal de transport est contrôlée grâce à des brûleurs disposés au-dessus du réservoir avant l'introduction du verre en fusion dans la zone de laminage.

En revanche, cette installation ne permet pas de contrôler de manière précise la température du verre s'écoulant en dehors du réservoir vers les rouleaux de laminage. En effet, le contrôle de la température du verre au niveau des rouleaux de laminage est réalisé de manière indirecte en fonction de la température du verre dans le réservoir, de la distance séparant le réservoir des rouleaux de laminage et du débit de verre s'écoulant vers les rouleaux. Ce contrôle indirect s'avère relativement imprécis.

L'invention a notamment pour but de fournir une installation de fabrication de verre texturé qui permette un meilleur contrôle de la température du verre au niveau des rouleaux de laminage.

A cet effet, l'invention a pour objet une installation de fabrication de verre texturé comprenant :
- une zone d'alimentation en verre fondu,
- au moins deux rouleaux de laminage du verre, dont l'un au moins comprend une surface texturée,
- au moins une lèvre de coulée du verre fondu depuis la zone d'alimentation vers les rouleaux,
- des moyens de chauffage direct de la lèvre de coulée.

Dans le cadre de la présente invention, la zone d'alimentation consiste en un réservoir pour verre en fusion ou en un canal de transport dans lequel le verre en fusion s'écoule depuis le réservoir vers les rouleaux.

Une lèvre de coulée (parfois appelée lip, floor ou spout en anglais) est couramment utilisée dans les installations de fabrication de verre texturé pour guider le verre fondu depuis la sortie de la zone d'alimentation vers les deux rouleaux de laminage du verre. Grâce aux moyens de chauffage direct de la lèvre de coulée on peut contrôler de manière précise la température du verre s'écoulant entre la zone d'alimentation et les rouleaux de laminage du verre, par l'intermédiaire d'un contrôle de la température de la lèvre de coulée. Ainsi, on contrôle de manière plus précise la température du verre lors de son laminage, ce qui améliore la qualité du verre texturé fabriqué grâce à l'installation selon l'invention.

On parle de moyens de chauffage direct de la lèvre pour désigner des moyens dont la fonction est spécifiquement de chauffer la lèvre. En d'autres termes, tout élément qui n'aurait pas pour fonction de chauffer spécifiquement la lèvre en lui apportant de l'énergie, mais qui contribuerait de manière indirecte à son chauffage, n'est pas considéré comme un moyen de chauffage direct de la lèvre. Par exemple le verre en fusion s'écoulant à la surface de la lèvre de l'installation de l'état de la technique, bien que contribuant au réchauffement de la lèvre, n'est pas un moyen de chauffage direct de la lèvre au sens de la présente invention.

L'installation selon l'invention présente en outre l'avantage de faciliter les opérations de remplacement des rouleaux de laminage du verre, par exemple pour changer les motifs à imprimer sur le verre texturé. En effet, pour changer les rouleaux de laminage, on interrompt la coulée du verre hors de la zone d'alimentation au moyen d'un barrage (parfois appelé tweel en anglais). Une fois que la coulée est interrompue, on change au moins un des rouleaux de laminage.

Avant de reprendre la fabrication du verre texturé, il est nécessaire, dans l'état de la technique, de préchauffer la lèvre de coulée avant le transfert du verre en fusion entre la zone d'alimentation et l'entrée des rouleaux de laminage. Cette opération de préchauffage est réalisée en faisant couler à perte du verre en fusion sur la lèvre de coulée pour que celle-ci reprenne sa température optimale de manière stable et permette ainsi de fabriquer du verre texturé de qualité. Cette étape de mise en marche de l'installation, coûteuse en verre et en temps, est indispensable car si l'on ne procède pas à la mise en température de la lèvre de coulée, le verre produit risque de comprendre des grumeaux, des craquelures et des défauts de couleur.

Grâce à l'installation de l'invention, la lèvre de coulée peut être maintenue à sa température optimale même lors du changement des rouleaux de laminage, ce qui permet ainsi de reprendre rapidement la production du verre texturé sans perte ni rebut et de réduire ainsi la durée de changement des rouleaux. En outre, le maintien de la lèvre de coulée à température pendant cette opération limite les contraintes thermiques imposées à la lèvre et permet d'augmenter sa durée de vie.

De plus, dans les installations de l'état de la technique, les variations thermiques intervenant au début de la reprise de la coulée amènent des changements importants dans l'homogénéité du verre qui se traduisent par la formation de bulles que l'on attribue généralement au gradient thermique entre la masse de verre dans le réservoir et la masse de verre s'écoulant hors de la zone d'alimentation. Ces bulles restent généralement emprisonnées dans le verre et constituent autant de défauts du verre.

Grâce à l'installation, on évite largement la formation de bulle à l'interface entre le barrage (tweel) et le verre.

Un autre avantage attribué à l'invention est lié à l'homogénéité thermique quasi parfaite du verre au niveau de la lèvre de coulée qui permet d'éviter la génération de contraintes de cisaillement dans le verre s'écoulant de la lèvre.

Une installation selon l'invention peut en outre comprendre l'une ou plusieurs des caractéristiques suivantes.

Les moyens de chauffage sont disposés en surface de la lèvre. Par exemple, les moyens de chauffage comprennent des résistances électriques disposées contre la surface de la lèvre opposée à la surface sur laquelle s'écoule le verre en fusion.

Les moyens de chauffage sont disposés dans la masse de la lèvre. On ménage par exemple au moins une cavité dans la lèvre à l'intérieur de laquelle on positionne une ou plusieurs résistances électriques. Ainsi, la lèvre est chauffée à même son coeur ce qui permet une meilleure homogénéité de la température et un chauffage de la lèvre plus rapide.

La lèvre comprend une cavité remplie d'un matériau isolant thermique, par exemple de la mousse isolante. Cela permet une meilleure conservation de la température de la lèvre et augmente sa durée de refroidissement.

La lèvre de coulée est réalisée en silice vitreuse. De nos jours, les lèvres de coulée sont réalisées le plus souvent en Jargal (marque déposée) qui est un matériau comprenant de la silimanite. Ce matériau pose des problèmes car il libère des grains qui peuvent se déposer à la surface du verre texturé fabriqué. La présence de tels grains à la surface du verre est à éviter notamment lorsque le verre est destiné à être en contact avec des cellules photovoltaïques pour la fabrication de panneaux solaires. En outre, la conductivité thermique de ce matériau est relativement élevée et n'est pas totalement adéquate pour une telle application. La silice vitreuse ne pose pas ces problèmes et ne génère pas de tels dépôts de grain. Cependant, personne n'avait envisagé jusqu'à présent d'utiliser de la silice vitreuse pour concevoir une lèvre de coulée d'une installation de fabrication de verre texturé car la silice vitreuse est un matériau qui subit un changement de phase cristallographique lors de sa montée en température, ce qui a pour effet de créer des fissures à sa surface lors de son refroidissement. Or, comme indiqué précédemment, les lèvres de coulée des installations de l'état de la technique subissent nécessairement d'importants changements de température lors du renouvellement des rouleaux de laminage, ce qui dissuade d'utiliser une lèvre en silice vitreuse. Grâce à l'invention et à la présence de moyens de chauffage direct de la lèvre de coulée, il est possible de maintenir sensiblement constante la température de la lèvre de coulée, même lors du changement des rouleaux, de limiter, voire même d'éliminer les transferts et les opérations de préchauffage en dehors de la zone de laminage et par conséquent d'utiliser de la silice vitreuse pour la fabrication de la lèvre.

La lèvre est réalisée d'un seul tenant et présente une longueur au moins égale à 600 mm. Ainsi, on a déjà réalisé des pièces de 1500 et 3000 mm. Le matériau Jargal utilisé dans l'état de la technique pour la fabrication de lèvres de coulée ne permet pas d'obtenir des lèvres de grandes dimensions possédant une bonne qualité de surface. Aussi, il est courant que les lèvres de coulée de l'état de la technique, réalisées en Jargal, soient en fait constituées par l'assemblage d'une pluralité de lèvres élémentaires disposées les unes à côté des autres et reliées au moyen de joints. Or, la présence de ces joints forme des imperfections de surface sur le verre texturé qui nuisent à la qualité du verre ainsi obtenu. On parle généralement d'effet couture. Grâce à l'invention et à la possibilité d'utiliser une lèvre de coulée réalisée en silice vitreuse, on peut munir l'installation d'une lèvre de grande longueur réalisée d'un seul tenant et ainsi de supprimer l'effet couture, ce qui permet d'obtenir des plaques de verre de grande largeur sans défaut apparent.

La lèvre de coulée comprend, dans sa masse, un (ou plusieurs) canal d'écoulement d'un fluide caloporteur, et les moyens de chauffage comprennent des moyens de mise en circulation, dans le canal d'écoulement de la lèvre, d'un fluide à une température prédéterminée. Le ou les canaux d'écoulement du fluide constituent une géométrie idéale pour les transferts thermiques de la surface de la lèvre de coulée vers l'intérieur de celle-ci favorisant une température homogène de la lèvre et permettant également, lors de la première montée en température, l'évacuation vers ce canal de tout élément gazeux présent dans le matériau de la lèvre de coulée. Après la mise en service de la lèvre de coulée, ce canal ou cavité peut être utilisé pour amener un fluide caloporteur (air en général) pour réchauffer la surface interne de la lèvre. Des échangeurs de types bruleurs par exemples présentent les propriétés requises pour une telle application. L'échange thermique peut toutefois également être assuré de manière indirecte par un échangeur calorifique (des types air-gaz ou air-liquide par exemple), mais également en échange direct si le chauffage est réalisé en basse pression.

Le fluide s'écoulant à l'intérieur de la lèvre peut être un liquide tel que de l'eau ou un gaz tel que de l'air. Dans cette configuration, on obtient un meilleur contrôle de la température de la lèvre car celle-ci est chauffée en son sein.

En section, la surface du canal d'écoulement est de préférence au moins égale 60 % de la surface délimitée par le contour externe de la lèvre. Grâce à l'utilisation de la silice vitreuse pour fabriquer la lèvre, il est possible de fabriquer une lèvre creuse de faible épaisseur, ce qui permet un très bon contrôle de sa température.

L'invention a également pour objet une lèvre de coulée pour une installation telle que précédemment définie.

En d'autres termes, l'invention a notamment pour objets :
- une lèvre comprenant une cavité remplie d'un matériau isolant thermique,
- une lèvre de coulée réalisée en silice vitreuse,
- une lèvre réalisée d'un seul tenant et présentant une longueur au moins égale à 600 mm,
- une lèvre de coulée comprenant, dans sa masse, un canal d'écoulement d'un fluide, et
- une lèvre dont la surface du canal d'écoulement est au moins égale à 60% de la surface délimitée par le contour externe de la lèvre.

L'invention a également pour objet un procédé de fabrication d'un verre texturé utilisant une installation de fabrication de verre texturé telle que précédemment définie.

Un procédé selon l'invention peut en outre comprendre l'une ou plusieurs des caractéristiques suivantes.

On chauffe la lèvre de coulée à une température déterminée en fonction d'une température prédéterminée d'écoulement du verre sur la lèvre.

Le procédé comprend une étape de fabrication de verre texturé comprenant une pluralité de motifs, le verre étant destiné à la fabrication de panneaux solaires. Les verres utilisés pour la fabrication de panneaux solaires comprennent une pluralité de motifs formant des loupes destinées à focaliser la lumière du soleil vers les cellules photovoltaïques. Grâce à l'utilisation du procédé de l'invention qui permet de supprimer les problèmes liés à l'utilisation des matériaux de l'état de la technique, tels que les tensions à la surface du verre du fait de l'utilisation d'une lèvre de coulée en silice vitreuse, on peut fabriquer un verre de bonne qualité pouvant être utilisé pour des applications de type panneaux solaires.

Le procédé comprend une étape de fabrication de plaques de verre d'une largeur d'au moins 600 mm, destinées à la fabrication de panneaux solaires. Ainsi, la mise en oeuvre directe du procédé de l'invention (notamment lorsque l'installation comprend une lèvre de coulée réalisée en silice vitreuse) permet d'obtenir des plaques de verre texturé de grande largeur comprenant une pluralité de motifs dont l'usage est recommandé pour la fabrication de panneaux solaires et sans effet couture. De telles plaques de verre ne pouvaient jusqu'à présent pas être fabriquées.

L'invention sera mieux comprise à la lecture de la description qui va suivre, donnée uniquement à titre d'exemple et faite en se référant aux figures annexées dans lesquelles :
- la figure 1 est un schéma selon une section longitudinale verticale d'une installation selon l'invention,
- les figures 2 à 5 sont des schémas selon une section longitudinale verticale d'une lèvre de coulée de l'installation de la figure 1, selon quatre variantes.

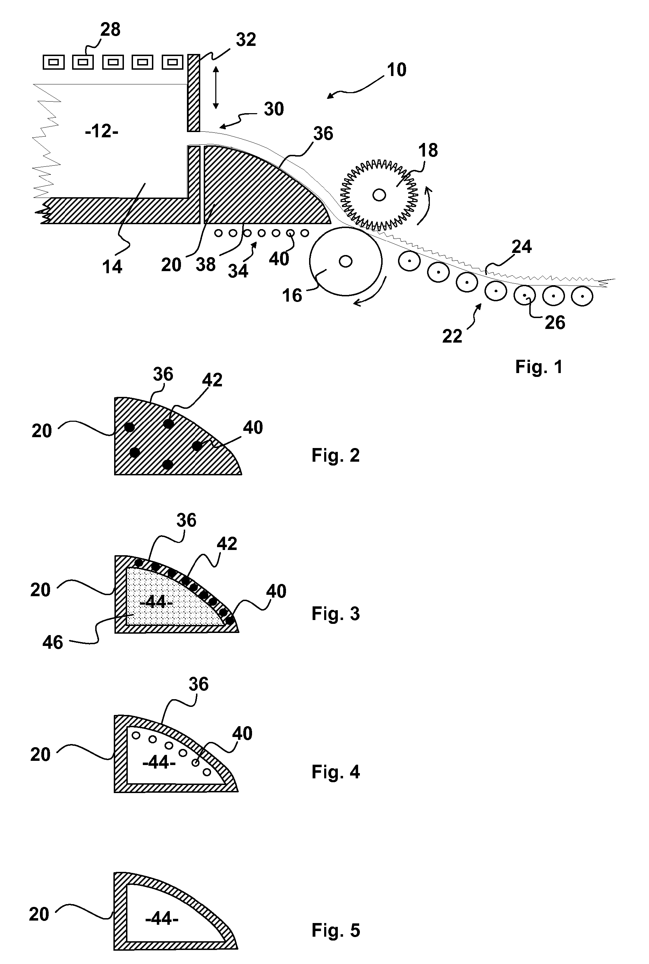

On a représenté sur la figure 1 une installation de fabrication de verre texturé selon l'invention, en section longitudinale verticale. Cette installation est désignée par la référence générale 10.

L'installation 10 comprend :
- une zone d'alimentation (en l'occurrence, un réservoir) 12 pour verre fondu 14 également désigné verre en fusion 14,
- deux rouleaux inférieur 16 et supérieur 18 de laminage du verre fondu 14 pour former une bande 24 de verre texturé,
- une lèvre de coulée 20 destinée à guider le verre fondu 14 depuis la zone d'alimentation 12 vers les deux rouleaux 16 et 18 de laminage, la lèvre 20 comprenant une surface supérieure courbe 36 sur laquelle s'écoule le verre fondu 14 lors de la fabrication du verre texturé, et une surface inférieure 38, et
- un support 22 pour la bande 24 de verre texturé, le support 22 comprenant une pluralité de rouleaux 26 permettant de déplacer la bande 24 après laminage.

Le réservoir est muni de moyens 28 de fusion du verre 14 contenu dans le réservoir. Les moyens 28 sont par exemple des brûleurs à gaz. Les brûleurs 28 sont disposés en partie supérieure du réservoir, à proximité de la surface du verre fondu.

Le réservoir comprend en outre une embouchure 30 destinée à permettre l'écoulement du verre fondu 14 hors du réservoir sur la lèvre de coulée 20. La dimension de l'embouchure 30 peut être contrôlée au moyen d'un barrage 32 mobile, apte à obturer cette embouchure 30 pour arrêter temporairement l'écoulement du verre hors du réservoir.

Les deux rouleaux 16 et 18 de laminage sont disposés à proximité de la lèvre 20 de sorte que le verre en fusion s'écoulant sur la lèvre de coulée 20 est guidé vers la zone située entre les deux rouleaux 16 et 18. Pour permettre le laminage du verre, les deux rouleaux tournent en sens contraire comme représenté par des flèches sur la figure 1. La distance entre les axes des deux rouleaux peut être modifiée pour contrôler l'épaisseur de la plaque de verre obtenue après laminage.

Le rouleau inférieur 16 comprend une surface lisse tandis que le rouleau supérieur 18 comprend une surface texturée dont les motifs sont des négatifs des motifs que l'on souhaite obtenir sur la bande 24 de verre. Bien entendu, le rouleau texturé de l'installation pourrait se trouver en partie inférieure ou les deux rouleaux de l'installation pourraient être texturés.

De manière optionnelle, les deux rouleaux de laminage 16 et 18 peuvent être refroidis, par exemple par circulation d'eau.

L'installation 10 comprend en outre des moyens 34 de chauffage de la lèvre de coulée 20 couplés, de manière optionnelle, à un ou plusieurs capteurs de température (non représentés) de la lèvre ou du verre s'écoulant sur la lèvre. La température à laquelle la lèvre 20 est chauffée est déterminée en fonction d'une température de consigne prédéterminée d'écoulement du verre 14 sur la lèvre. En particulier, cette température est fonction de la température du verre en fusion souhaitée au niveau des deux rouleaux 16 et 18 de laminage.

Selon un premier mode de réalisation de l'invention représenté sur la figure 1, on a disposé une pluralité de résistances électriques 40 formant moyens de chauffage 34, à proximité de la surface inférieure 38 de la lèvre 20.

Ces résistances 40, lorsqu'elles sont en fonctionnement, ont pour effet de chauffer la surface inférieure 38 de la lèvre 20. La chaleur procurée à la surface inférieure 38 de la lèvre 20 se propage dans l'ensemble de la lèvre 20 jusqu'à atteindre la surface supérieure courbe de coulée 36. Ainsi, grâce à l'utilisation de résistances 40 disposées en surface de la lèvre, on peut chauffer l'ensemble de cette lèvre 20.

Dans l'exemple du premier mode de réalisation représenté sur la figure 1, la lèvre est pleine. Toutefois, on peut prévoir dans cette lèvre une ou plusieurs cavités comme on le verra par la suite.

Selon un second mode de réalisation représenté sur les figures 2 à 5, les moyens de chauffage 34 sont disposés dans la masse de la lèvre de coulée 20.

Selon une première variante représentée sur les figures 2 et 3, des orifices 42, adaptés pour recevoir les résistances électriques 40, sont ménagés à l'intérieur de la lèvre 20. Par exemple, les orifices 42 ont une forme sensiblement cylindrique de dimensions légèrement supérieure à celles des résistances. Ainsi, la lèvre peut être chauffée en différents points de sa masse, et en particulier en son coeur.

Dans la variante de la figure 3, les orifices 42, et donc les résistances électriques 40, sont placés à proximité de la surface 36 de la lèvre 20 sur laquelle s'écoule le verre fondu 12. Cela permet alors un meilleur contrôle de la température du verre s'écoulant sur la surface 36, du fait de la proximité du verre fondu avec les résistances 40.

Dans les variantes représentées sur les figures 3 à 5, la lèvre 20 comprend une cavité 44 intérieure occupant la majorité de son volume. De préférence, la cavité est agencée de sorte qu'en section, la surface de cette cavité est supérieure à 60% de la surface délimitée par le contour externe de la lèvre 20. En d'autres termes, la lèvre 20 est creuse.

Grâce à la présence de la cavité 44, la lèvre 20 est plus légère car elle comprend moins de matière. Par ailleurs, grâce au fait qu'elle contient moins de matière, son chauffage est plus rapide et sa température plus homogène.

Dans la variante de la figure 3, la cavité 44 est remplie d'un matériau thermiquement isolant, tel que de la mousse isolante 46 (par exemple un matériau moussé en céramique) qui permet une meilleure conservation de la chaleur de la lèvre 20. Ainsi, le chauffage de la lèvre 20 requiert moins d'énergie.

Dans la variante représentée sur la figure 4, des résistances électriques 40 sont disposées à l'intérieur de la cavité 44, à proximité de la surface 36 de la lèvre 20 sur laquelle s'écoule le verre fondu 14.

Dans la variante représentée sur la figure 5, la cavité 44 est vide et débouche sur deux surfaces de la lèvre, de préférence opposées, de manière à former un canal d'écoulement d'un fluide. La forme du canal d'écoulement n'est pas forcément linéaire et peut former un réseau de circulation de fluide dans toute la lèvre. Le fluide est par exemple un fluide calorifique, liquide ou gazeux (par exemple de l'air porté à une température comprise entre 750 et 1050°C). Dans cette variante, les moyens de chauffage de la lèvre 20 comprennent des moyens (non représentés) de mise en circulation, dans le canal d'écoulement formé par la cavité 44, d'un fluide à une température prédéterminée. Les moyens de mise en circulation peuvent également comprendre des moyens de chauffage (non-représentés) du fluide circulant dans la cavité 44. Cette variante s'avère particulièrement simple et économique à réaliser, car la conception de la lèvre, le montage de l'installation 10 et son entretien sont très simples.

Dans tous les modes de réalisation décrits et leurs variantes, étant donné que la lèvre est chauffée grâce aux moyens de chauffage, la lèvre peut être réalisée en silice vitreuse car la lèvre reste constamment à une température élevée.

Par ailleurs, grâce à l'utilisation de silice vitreuse, on peut concevoir une lèvre de grande longueur. De préférence, la lèvre mesure au moins 600 mm de long et est réalisée d'un seul tenant.

Du fait que la lèvre est réalisée d'un seul tenant et présente une grande longueur, on peut concevoir des plaques de verre de grande largeur pouvant ainsi être utilisées pour la fabrication de panneaux solaires.

Référence des dessins
- 10: installation de fabrication de verre texturé
- 12: zone d'alimentation en verre fondu
- 14: verre fondu
- 16: rouleau inférieur
- 18: rouleau supérieur
- 20: lèvre de coulée
- 22: support pour la bande de verre texturé
- 24: bande de verre texturé
- 26: rouleau de support
- 28: moyen de fusion du verre
- 30: embouchure
- 32: barrage mobile (tweel)
- 34: moyens de chauffage de la lèvre
- 36: surface supérieure courbe de la lèvre
- 38: surface inférieure de la lèvre
- 40: résistance électrique
- 42: orifice pour les résistances
- 44: Cavité
- 46: Matériau isolant

## Revendications

1. Installation (10) de fabrication de verre texturé, **caractérisée en ce qu'**elle comprend :
- une zone d'alimentation (12) pour verre fondu (14),
- au moins deux rouleaux (16, 18) de laminage du verre, dont l'un (18) au moins comprend une surface texturée,
- au moins une lèvre (20) de coulée du verre fondu (14) depuis la zone d'alimentation (12) vers les rouleaux (16, 18),
- des moyens (34, 40) de chauffage direct de la lèvre (20) de coulée.

2. Installation (10), selon la revendication précédente, dans laquelle les moyens (34, 40) de chauffage sont disposés en surface (32, 36) de la lèvre (20).

3. Installation (10) selon l'une quelconque des revendications précédentes, dans laquelle les moyens (34, 40) de chauffage sont disposés dans la masse de la lèvre (20).

4. Installation (10) selon l'une quelconque des revendications précédentes, dans laquelle la lèvre (20) comprend une cavité (44) remplie d'un matériau (46) isolant thermique.

5. Installation (10) selon l'une quelconque des revendications précédentes, dans laquelle la lèvre (20) de coulée est réalisée en silice vitreuse.

6. Installation (10) selon la revendication précédente, dans laquelle la lèvre (20) est réalisée d'un seul tenant et présente une longueur au moins égale à 600 mm, de préférence au moins égale à 1500 mm.

7. Installation (10) selon l'une quelconque des revendications précédentes, dans laquelle la lèvre (20) de coulée comprend, dans sa masse, un canal (44) d'écoulement d'un fluide, et les moyens de chauffage (34) comprennent des moyens de mise en circulation, dans le canal (44) d'écoulement de la lèvre (20), d'un fluide à une température prédéterminée.

8. Installation (10) selon la revendication précédente, dans laquelle en section, la surface du canal (44) d'écoulement est au moins égale à 60% de la surface délimitée par le contour externe de la lèvre (20).

9. Lèvre (20) de coulée **caractérisée en ce qu'**elle est adaptée pour une installation (10) selon l'une quelconque des revendications 3 à 8.

10. Procédé de fabrication d'un verre texturé, **caractérisé en ce qu'**on utilise une installation (10) de fabrication de verre texturé selon l'une quelconque des revendications 1 à 8.

11. Procédé selon la revendication précédente, dans lequel on chauffe la lèvre (20) de coulée à une température déterminée en fonction d'une température de consigne prédéterminée d'écoulement du verre (14) sur la lèvre (20).

12. Procédé selon l'une quelconque des revendications 10 et 11, comprenant une étape de fabrication de verre texturé comprenant une pluralité de motifs, le verre étant destiné à la fabrication de panneaux solaires.

13. Procédé selon la revendication précédente, comprenant une étape de fabrication de plaques de verre d'une largeur d'au moins 600 mm, de préférence d'au moins 1500 mm, destinées à la fabrication de panneaux solaires.

14. Plaque de verre d'une largeur d'au moins 600 mm, de préférence d'au moins 1500 mm, comprenant une pluralité de motifs destinée à la fabrication de panneaux solaires, **caractérisée en ce qu'**elle ne comprend pas de défaut de couture.
